# EUROPEAN PATENT SPECIFICATION

(11) **EP 3 229 210 B1**
(45) Date of publication and mention of the grant of the patent: **03.06.2020**
(21) Application number: 17177822.8
(22) Date of filing: 26.06.2017
(51) Int. Cl.: G06T 15/08, G06T 19/00

(54) **METHOD AND MEDICAL IMAGE DATA PROCESSING DEVICE FOR DETERMINING A GEOMETRIC MODEL OF AN ANATOMICAL VOLUME OBJECT**
VERFAHREN UND VORRICHTUNG ZUR BEARBEITUNG DER DATEN MEDIZINISCHER BILDER ZUR BESTIMMUNG EINES GEOMETRISCHEN MODELLS EINES ANATOMISCHEN VOLUMENOBJEKTS
PROCÉDÉ ET DISPOSITIF DE TRAITEMENT DE DONNÉES D'IMAGE MÉDICALE PERMETTANT DE DÉTERMINER UN MODÈLE GÉOMÉTRIQUE D'UN OBJET DE VOLUME ANATOMIQUE

(43) Date of publication of application: 11.10.2017
(73) Proprietor: Siemens Healthcare GmbH, 91052 Erlangen (DE)
(72) Inventor: Wels, Michael, 96047 Bamberg (DE); Schöbinger, Max, 96114 Hirschaid (DE); Sühling, Michael, 91052 Erlangen (DE)

(56) References cited:
- US-A1- 2006 008 143
- US-A1- 2007 230 782
- US-A1- 2015 104 090
- SIVALINGAM UDHAYARAJ ET AL: "Inner and outer coronary vessel wall segmentation from CCTA using an active contour model with machine learning-based 3D voxel context-aware image force", PROGRESS IN BIOMEDICAL OPTICS AND IMAGING, SPIE - INTERNATIONAL SOCIETY FOR OPTICAL ENGINEERING, BELLINGHAM, WA, US, vol. 9785, 24 March 2016 (2016-03-24), pages 1-8, XP060070482, ISSN: 1605-7422, DOI: 10.1117/12.2216200 ISBN: 978-1-5106-0027-0
- WELS MICHAEL ET AL.: "Intuitive and Accurate Patient-Specific Coronary Tree Modeling from Cardiac Computed-Tomography Angiography", 3RD INTERACTIVE MEDICAL IMAGE COMPUTING WORKSHOP (MICCAI IMIC 2016), OCTOBER 17-21 2016, 17 October 2016 (2016-10-17), - 9 November 2016 (2016-11-09), pages 86-93, XP55429217, Athen, Greece

## Description

The invention relates in one aspect to a method for determining a geometric model of an anatomical volume object. In another aspect, the invention relates to a medical image data processing device for determining a geometric model of an anatomical volume object. In further aspects, the invention relates to a medical imaging device, a computer program product and a computer-readable medium.

In the case of coronary plaque analysis [Ref. 3] from cardiac computed-tomography angiography (CCTA) data one often wants to restrict plaque compartment separation on the vessel wall itself excluding the free lumen. One way to achieve this is the use of implicit geometric surface models both for the inner and outer vessel wall and allow for intuitive manual editing from the curved planar reconstruction (CPR) and cross sectional views [Ref. 4] in an appropriate application. [Ref. 3] describes plaque analysis workflows without explicitly modeling the inner vessel wall. US 7920734 B2 discloses a method for visualization of plaque deposits from 3D image data records of vessel structures.

The 3D area (or volume) to be analyzed with regard to plaque can be defined as inside the outer and outside the inner vessel wall. By doing so it is however not excluded that the inner vessel surface and the outer vessel surface may end up in implausible configurations after CPR or cross sectional editing operations. In a similar manner, the centerline running in the middle of the free lumen should conceptually remain there when editing operations of the inner wall imply an updated course of this very centerline. These editing operations typically yield new surface points intending to alter the course of the implicit surface at the zero level.

US 2015/104090 A1 discloses a method for interactively at least one of creating and modifying a hollow organ representation on the basis of medical-technical image data of a hollow organ, the method comprising:
- providing the medical-technical image data together with a hollow organ course line representing a course of the hollow organ, and
- providing a plurality of contour representations of a contour of the hollow organ representation along the hollow organ course line.

US 2007/230782 A1 discloses a method of object mapping in a multi-dimensional dataset, the method comprising:
- carrying out a segmentation of the multi-dimensional dataset using multi-dimensional graphic objects,
- defining a set of geometric relations between a set of geometric templates using a geometrical relational application framework macro, and
- associating the multi-dimensional graphic objects with the geometric templates.

The publication "Inner and outer coronary vessel wall segmentation from CCTA using an active contour model with machine learning-based 3D voxel context-aware image force", by SIVALINGAM ET AL, in PROGRESS IN BIOMEDICAL OPTICS AND IMAGING, vol. 9785, 24 March 2016, pages 1-8, discloses a technique for automated segmentation of inner or outer vessel wall by means of active contour model.

The underlying technical problem of the invention is to facilitate an improved determination of a geometric model of an anatomical volume object. This problem is solved by the method of claim 1, by medical image data processing device of claim 13, by the medical imaging device of claim 14, by the computer program product of claim 15 and by the computer-readable medium 16. The dependent claims are related to further aspects of the invention.

The invention relates in a first aspect to a computer-implemented method for determining a geometric model of an anatomical volume object based on 1, medical image data of the anatomical volume according to claim 1, comprising:
- generating a first representation of a first subset of the anatomical volume object based on the medical image data, wherein the anatomical volume object comprises a tubular structure, wherein the tubular structure is a vessel, wherein the first representation represents a first surface of the anatomical volume object,
- generating a second representation of a second subset of the anatomical volume object based on the medical image data,
- setting first boundary indicators indicative of an intended course of a modified first representation, wherein the second representation represents a second surface or a centerline of the anatomical volume object,
- setting second boundary indicators indicative of an intended course of a modified second representation based on the first boundary indicators, wherein the second boundary indicators are set in a way that the intended course of the modified second representation is in compliance with a geometrical constraint implied by the intended course of the modified first representation,
- determining the geometric model of the anatomical volume object, the determining comprising generating the modified first representation based on the first boundary indicators and generating the modified second representation based on the second boundary indicators,
- wherein the geometrical constraint requires the modified first representation being enclosed by the modified second representation or
- wherein the geometrical constraint requires the modified second representation being enclosed by the modified first representation.

The tubular structure may be, for example, a hollow tubular structure. The vessel may be a coronary vessel or a non-coronary vessel, for example a carotid vessel.

One embodiment of the invention relates to a method,
- wherein the tubular structure comprises an outer wall and an inner wall,
- wherein the first representation represents the outer wall,
- wherein the second representation represents the inner wall.

One embodiment of the invention relates to a method,
- wherein the tubular structure comprises an outer wall and an inner wall,
- wherein the second representation represents the outer wall,
- wherein the first representation represents the inner wall. One embodiment of the invention relates to a method,
- wherein the tubular structure comprises an inner wall,
- wherein the first representation represents the inner wall,
- wherein the second representation represents a centerline of the tubular structure.

According to the invention, the medical image data comprises three-dimensional image data of an examination region of interest of a subject to be examined, and the geometric model is a three-dimensional geometric model.

The method according to the first aspect of the invention further comprises:
- generating a two-dimensional view of the anatomical volume object,
- wherein setting the first and/or second boundary indicators occurs in the two-dimensional view,
- wherein generating the modified first representation based on the first boundary indicators comprises transforming the first boundary indicators from the two-dimensional view into three-dimensional space,
- wherein generating the modified second representation based on the second boundary indicators comprises transforming the second boundary indicators from the two-dimensional view into the three-dimensional space.

One embodiment of the invention relates to a method, wherein the two-dimensional view comprises a non-linearly reformatted view and/or a cross sectional view. A non-linearly reformatted view may be, for example, a curved planar reconstruction view. One embodiment of the invention relates to a method, wherein the first representation is a first implicit surface representation and/or wherein the second representation is a second implicit surface representation.

The invention relates in a second aspect to a medical image data processing device configured to perform the above method according to the first aspect of the invention, comprising:
- a first representation generation unit to generate a first representation of a first subset of the anatomical volume object based on the medical image data,
- a second representation generation unit to generate a second representation of a second subset of the anatomical volume object based on the medical image data,
- a first boundary setting unit to set first boundary indicators indicative of an intended course of a modified first representation,
- second boundary setting unit to set second boundary indicators indicative of an intended course of a modified second representation based on the first boundary indicators, wherein the second boundary indicators are set in a way that the intended course of the modified second representation is in compliance with a geometrical constraint implied by the intended course of the modified first representation,
- a geometrical model determination unit to determine the geometric model of the anatomical volume object, comprising a modified first representation generation unit to generate a modified first representation based on the first boundary indicators and a modified second representation generation unit to generate a modified second representation based on the second boundary indicators.

The medical image data processing device can be realized as a data processing system or as a part of a data processing system. The data processing system can, for example, comprise a cloud-computing system, a computer network, a computer, a tablet computer, a smartphone or the like. The data processing system can comprise hardware and/or software. The hardware can be, for example, a processor system, a memory system and combinations thereof. The hardware can be configurable by the software and/or be operable by the software.

The invention relates in a third aspect to a medical imaging device, comprising:
- a scan unit to scan an examination region of interest of a subject to be examined;
- a control device to control the scan unit; and
- the medical image data processing device according to the second aspect of the invention.

The medical imaging device may be, for example, any volumetric medical imaging modality used for analyzing vessel walls. The medical imaging device may be, for example, selected from the group consisting of a computed tomography device, a magnetic resonance imaging device, a molecular imaging device, a SPECT-device, a PET-device and combinations thereof. The medical imaging device can be, for example, a combination of an imaging modality and a therapy modality, in particular a radiation therapy modality.

The invention relates in a fourth aspect to a computer program product including a computer program, directly loadable into a memory device of a control device of a medical imaging device, including program sections for carrying out the method according to the first aspect of the invention when the computer program is executed in the control device of the medical imaging device.

The computer program product can be, for example, a computer program or comprise another element apart from the computer program. This other element can be hardware, for example a memory device, on which the computer program is stored, a hardware key for using the computer program and the like, and/or software, for example a documentation or a software key for using the computer program.

The invention relates in a fifth aspect to a computer-readable medium storing program sections, readable and executable by a computer unit, to carry out the method according to the first aspect of the invention when the program sections are executed by the computer unit.

The geometrical constraint may imply, for example, that the outer surface should not be allowed to intersect the inner surface and vice versa. The geometrical constraint may be used to couple both surfaces to mutually constrain each other. By making the surfaces mutually constraining each other it is possible to identify editing operations that are about to lead to implausible configurations by evaluating the surface points' positions relative to the constraining surface on-the-fly. Implausible configurations can be understood as configurations that are not in compliance with the geometrical constraint. If implausible surface points are identified, the constraining surface is updated likewise following these very surface points, too. That means the associated editing operations have impact both on the major surface and on the constraining surface.

Therefore, the invention provides smooth and controllable inner and outer vessel wall editing, wherein implausible configurations can be avoided. The inner and outer vessel walls can be edited based on a CPR view and/or a cross sectional view. The CPR view may be, for example, a straightened or regular CPR view.

Similarly, the centerline may be coupled with the inner surface to prevent implausible configurations of the inner surface with regard to the centerline. For also changing the course of the centerline according to new surface points, which is typically relevant for CPR-based surface editing, an alternative course of the centerline can be first computed in 2D from the drawn strokes on the CPR view itself and afterwards transformed to 3D using the tangent frame bundles defining the CPR view [Ref. 4].

According to one aspect of the invention, the inner and outer vessel wall both are represented by implicit surfaces [Ref. 4]. These surfaces can be evaluated at any 3D point in image space with sub-voxel accuracy yielding values > 0 outside, < 0 inside, and = 0 on the surface itself. Implicit surface representations allow flexible modeling of tubular structures at sub-voxel accuracy in contrast to explicit representations like, for example, 3D masks or meshes. Implicit modeling may be implemented, for example, by interpolating the surfaces of the volume object with radial basis functions.

The scope of the present invention is defined by the appended claims. Reference is made to the fact that the described method and the described medical image data processing device as well as the described imaging device are merely preferred example embodiments of the invention and that the invention can be varied by a person skilled in the art, without departing from the scope of the invention as it is specified by the claims.

The invention will be illustrated below with reference to the accompanying figures using example embodiments. The illustration in the figures is schematic and highly simplified and not necessarily to scale.
Fig. 1 shows a diagram illustrating a method according to one aspect of the invention.
Fig. 2 shows a medical image data processing device according to one aspect of the invention.
Fig. 3 - Fig. 8 show examples of first and second representations of subsets of an anatomical volume object in a two-dimensional view.
Fig. 9 shows a medical imaging device according to one aspect of the invention.

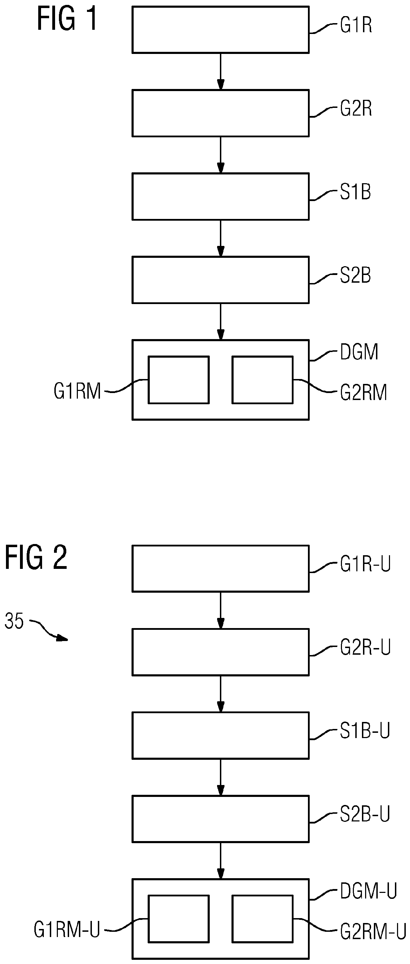

Fig. 1 shows a diagram illustrating a method according to one aspect of the invention, the method comprising
- generating G1R a first representation 1R of a first subset of the anatomical volume object VO based on the medical image data,
- generating G2R a second representation 2R of a second subset of the anatomical volume object VO based on the medical image data,
- setting S1B first boundary indicators 1B indicative of an intended course of a modified first representation 1RM,
- setting S2B second boundary indicators 2B indicative of an intended course of a modified second representation 2RM based on the first boundary indicators 1B, wherein the second boundary indicators 2B are set in a way that the intended course of the modified second representation 2RM is in compliance with a geometrical constraint implied by the intended course of the modified first representation 1RM,
- determining DGM the geometric model of the anatomical volume object VO, the determining comprising generating G1RM the modified first representation 1RM based on the first boundary indicators 1B and generating G2RM the modified second representation 2RM based on the second boundary indicators 2B.

Fig. 2 shows a medical image data processing device 35 according to one aspect of the invention, comprising:
- a first representation generation unit G1R-U to generate G1R a first representation 1R of a first subset of the anatomical volume object VO based on the medical image data,
- a second representation generation unit G2R-U to generate G2R a second representation 2R of a second subset of the anatomical volume object VO based on the medical image data,
- a first boundary setting unit S1B-U to set S1B first boundary indicators 1B indicative of an intended course of a modified first representation 1RM,
- a second boundary setting unit S2B-U to set S2B second boundary indicators 2B indicative of an intended course of a modified second representation 2RM based on the first boundary indicators 1B, wherein the second boundary indicators 2B are set in a way that the intended course of the modified second representation 2RM is in compliance with a geometrical constraint implied by the intended course of the modified first representation 1RM,
- a geometrical model determination unit DGM-U to determine DGM the geometric model of the anatomical volume object VO, comprising a modified first representation generation unit G1RM-U to generate G1RM a modified first representation 1RM based on the first boundary indicators 1B and a modified second representation generation unit G2RM-U to generate G2RM a modified second representation 2RM based on the second boundary indicators 2B.

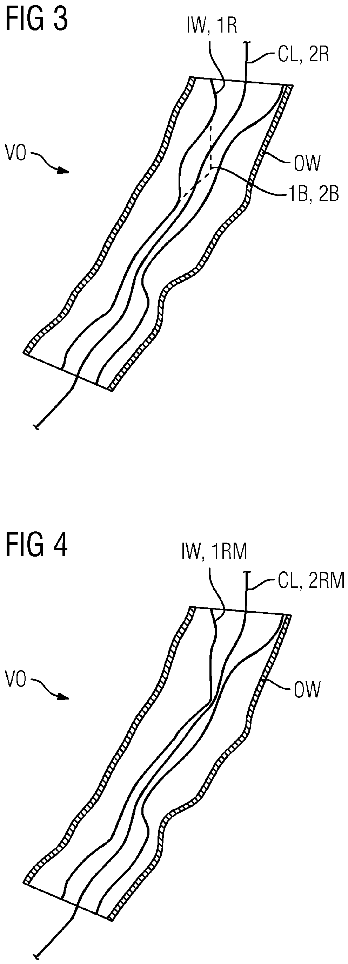

Fig. 3 - Fig. 8 show examples of first and second representations of subsets of an anatomical volume object VO in a two-dimensional view, wherein the anatomical volume object VO is a vessel. In the two-dimensional view, the first representation 1R and the second representation 2R as well as the modified first representation 1RM and the modified second representation 2R may be superimposed upon the anatomical volume object VO. The vessel comprises, in particular, the outer wall OW, the inner wall IW and the points that constitute the centerline CL. The outer wall OW, the inner wall IW and the centerline CL can be understood as subsets of the anatomical volume object VO.

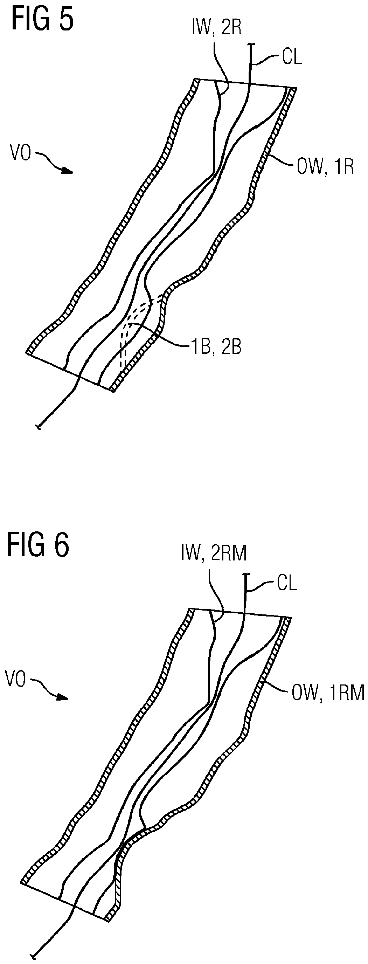

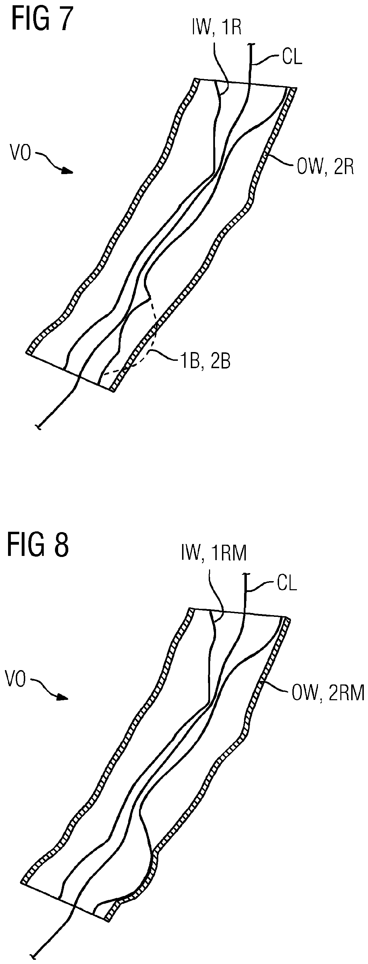

In Fig. 3 and Fig 4, the first representation 1R and the modified first representation 1RM represent the inner wall IW, whereas the second representation 2R and the modified second representation 2RM represent the centerline CL of the vessel. In Fig. 5 and Fig 6, the first representation 1R and the modified first representation 1RM represent the outer wall OW, whereas the second representation 2R and the modified second representation 2RM represent the inner wall. In Fig. 7 and Fig 8, the first representation 1R and the modified first representation 1RM represent the inner wall IW, whereas the second representation 2R and the modified second representation 2RM represent the outer wall OW.

The first representation 1R may be generated, for example, based on an automatic or semi-automatic initialization with the help of a segmentation algorithm for segmenting the first subset of the anatomical volume object VO. The second representation 2R may be generated, for example, based on an automatic or semi-automatic initialization with the help of a segmentation algorithm for segmenting the second subset of the anatomical volume object VO.

The first and second boundary indicators 1B and 2B are represented by the dashed line superimposed upon the anatomical volume object VO. The first boundary indicators 1B are selected manually by a user. This might be necessary if automatic and/or semi-automatic initialization [Ref. 1, Ref. 2] of the inner wall IW and/or outer wall OW provides suboptimal results. The dashed line indicates the intended course of the modified first representation 1RM according to the first boundary indicators 1B. Setting the first boundary indicators 1B may be accomplished, for example, by dragging the dashed line or by selecting pixels that are about to be located on or in the vicinity of the modified first representation 1RM. The user performs these editing operations with the help of a cursor on a display showing the two-dimensional view.

The boundary indicators 1B, 2B may be drawn in on the basis of so-called image evidence cues, i.e. structures in the image which may be used for a segmentation of the corresponding subset of the anatomical volume object VO. However, the boundary indicators may also be drawn in, insofar as the image evidence cues are absent from the acquired medical image data or the reformatted two-dimensional view, taking into consideration the anatomical knowledge of the user.

Without a modification to the second representation 2R, this would result in an implausible configuration, wherein the modified first representation 1RM is crossing the second representation 2R. The implausible configuration is avoided by generating a modified second representation 2RM based on the second boundary indicators 2B. The second boundary indicators are derived automatically from the first boundary indicators 1B. In one embodiment of the invention, the second boundary indicators 2B are set identical to first boundary indicators 1B. Alternatively, the second boundary indicators 2B may be derived from the first boundary indicators 1B while taking into account the geometrical constraint and/or other relevant information regarding the course of the first representation 1R and/or second representation 2R. After setting the first boundary indicators 1B and/or the second boundary indicators 2B in the two-dimensional view, they may be transformed back into three-dimensional space, for example based on an inversion of a non-linear planar reformation that was used to generate the two-dimensional view.

The invention provides, in one aspect, the possibility of convenient manual interaction with and correction of representations of the outer and inner vessel wall based, for example, on CPR and/or cross sectional views. Computations based on the two-dimensional view can be done, for example, in a few milliseconds. Intermediate results as, for example, the intended courses of the two vessel walls, are displayed in the two-dimensional view without any significant delay. Therefore, implausible wall and centerline configurations can be resolved on-the-fly at editing time. The method is implemented in an interactive tool with almost immediate visualization feedback, allowing a transparent and controllable application.

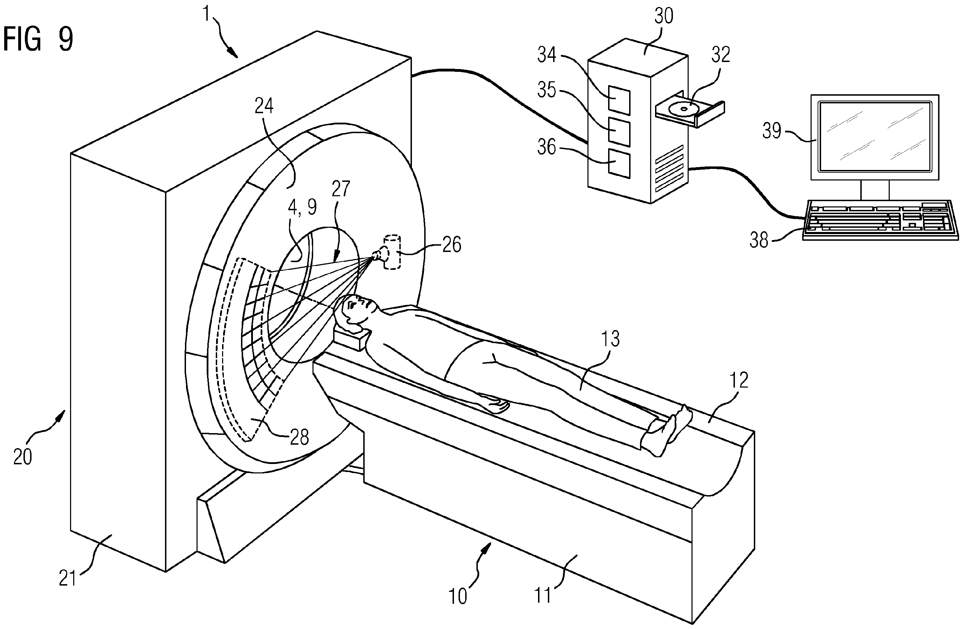

Fig. 9 shows a medical imaging device 1 according to one aspect of the invention, comprising the medical image data processing device 35. A computed tomography device is shown, by way of example, for the medical imaging device 1, without limiting the general inventive idea.

The imaging device 1 has a gantry 20. The gantry 20 has a stationary support frame 21. The gantry 20 has a rotor 24 mounted so it can be rotated by a pivot bearing device. The imaging device 1 has an image recording region 4 formed by a tunnel-like opening 9. A region of an object to be imaged can be arranged in the image recording region 4.

The imaging device 1 has a patient-positioning device 10. The patient-positioning device 10 has a positioning table 11 and a transfer plate 12 for positioning the patient 13. The transfer plate 12 is arranged on the positioning table 11 so it can be moved relative to the positioning table 11 such that the transfer plate 12 can be introduced into the image recording region 4 in a longitudinal direction of the transfer plate 12.

A scan unit in form of a radiation projection device 26, 28 is arranged on the rotor 24. The radiation projection device 26, 28 has a radiation source 26 which is designed to emit radiation quanta, and a detector 28 which is designed for detection of radiation quanta. The radiation quanta 27 can pass from the radiation source 26 to the region to be imaged and, following an interaction with the region to be imaged, strike the detector 28. In this way a projection profile of the region to be imaged can be detected.

At least one projection profile respectively can be detected for different arrangements of the radiation source 26 and the detector in respect of the region of the object to be imaged by rotation of the radiation projection device 26, 28 about the image recording region. A plurality of projection profiles can form a projection data set. A medical image, in particular a tomographic medical image, of the region to be imaged can be reconstructed on the basis of a projection data set by the image reconstruction unit 36.

The imaging device 1 has a control device 30 for controlling the imaging device 1, in particular the radiation projection device 26, 28 and the medical image data processing device 35. The imaging device 1 also has an input unit 38 for inputting control information, for example, imaging parameters, and examination parameters and an output unit 39 for outputting control information and images, in particular a medical image with a segmentation outcome obtained by the method according to one aspect of the invention. The control device 30 can be, for example, a computer and/or a data processing system. The control device comprises the computer-readable medium 32, the processor 34, the medical image data processing device 35 and the image reconstruction unit 36.

### Bibliography

[Ref. 1] Grosskopf et al.: Accurate, fast, and robust vessel contour segmentation of CTA using an adaptive self-learning edge model, SPIE Med. Imag.: Image Process., 72594D (2009).
[Ref. 2] Lugauer et al.: Precise Lumen Segmentation in Coronary Computed Tomography Angiography. In Medical Computer Vision: Algorithms for Big Data, MCV '14, 137-147, Cambridge, MA, USA, Sept. 2014.
[Ref. 3] Wels et al.: Semi-Automatic Coronary Plaque Analysis Workflow and Prototype. Prior Art Journal 2014 #17 - Pages: 90-92 - ISBN 978-3-942905-95-4; Volume No.: 99.
[Ref. 4] Wels et al.: Intuitive and Accurate Patient-Specific Coronary Tree Modeling from Cardiac Computed-Tomography Angiography. The 3rd Interactive Medical Image Computing Workshop (MICCAI IMIC 2016), Athens, Greece, 17.10.2016, 86-93, 2016.

## Claims

1. A computer-implemented method for determining a geometric model of an anatomical volume object (VO) based on medical image data of the anatomical volume object (VO), the method comprising:
- generating (G1R) a first representation (1R) of a first subset of the anatomical volume object (VO) based on the medical image data, wherein the medical image data comprises three-dimensional image data of an examination region of interest of a subject (13) to be examined, wherein the anatomical volume object (VO) comprises a tubular structure, wherein the tubular structure is a vessel, wherein the first representation (1R) represents a first surface of the anatomical volume object (VO),
- generating (G2R) a second representation (2R) of a second subset of the anatomical volume object (VO) based on the medical image data, wherein the second representation (2R) represents a second surface or a centerline (CL) of the anatomical volume object (VO),
- generating a two-dimensional view of the anatomical volume object (VO),
- setting (S1B) first boundary indicators (1B) indicative of an intended course of a modified first representation (1RM), wherein setting the first boundary indicators (2B) occurs in the two-dimensional view, wherein the first boundary indicators (1B) are manually selected by a user with the help of a cursor on a display showing the two-dimensional view,
- setting (S2B) second boundary indicators (2B) indicative of an intended course of a modified second representation (2RM) based on the first boundary indicators (1B), wherein the second boundary indicators (2B) are set in a way that the intended course of the modified second representation (2RM) is in compliance with a geometrical constraint implied by the intended course of the modified first representation (1RM), wherein the geometrical constraint requires the modified first representation (1RM) being enclosed by the modified second representation (2RM) or requires the modified second representation (2RM) being enclosed by the modified first representation (1RM), wherein setting the second boundary indicators (2B) occurs in the two-dimensional view, wherein the second boundary indicators (2B) are derived automatically from the first boundary indicators (1B),
- wherein the intended course of the modified first representation (1RM) and the intended course of the modified second representation (2RM) are displayed in the two-dimensional view for an almost immediate visualization feedback,
- determining (DGM) the geometric model of the anatomical volume object (VO), wherein the geometric model is a three-dimensional geometric model, the determining comprising generating (G1RM) the modified first representation (1RM) based on the first boundary indicators (1B) and generating (G2RM) the modified second representation (2RM) based on the second boundary indicators (2B), wherein generating (G1RM) the modified first representation (1RM) based on the first boundary indicators (1B) comprises transforming the first boundary indicators (1B) from the two-dimensional view into three-dimensional space, wherein generating (G2RM) the modified second representation (2RM) based on the second boundary indicators (2B) comprises transforming the second boundary indicators (2B) from the two-dimensional view into the three-dimensional space.

2. The method of claim 1,
- wherein the tubular structure comprises an outer wall (OW) and an inner wall (IW),
- wherein the first representation (1R) represents the outer wall (OW),
- wherein the second representation (2R) represents the inner wall (IW).

3. The method of claim 1,
- wherein the tubular structure comprises an outer wall (OW) and an inner wall (IW),
- wherein the second representation (2R) represents the outer wall (OW),
- wherein the first representation (1R) represents the inner wall (IW).

4. The method of claim 1,
- wherein the tubular structure comprises an inner wall (IW),
- wherein the first representation (1R) represents the inner wall (IW),
- wherein the second representation (2R) represents a centerline (CL) of the tubular structure.

5. The method of anyone of claims 1 to 4,
- wherein the two-dimensional view comprises a non-linearly reformatted view and/or a cross sectional view.

6. The method of any one of claims 1 to 5,
- wherein the first representation (1R) is a first implicit surface representation and/or
- wherein the second representation (2R) is a second implicit surface representation.

7. A medical image data processing device (35), comprising:
- a first representation generation unit (G1R-U) to generate (G1R) a first representation (1R) of a first subset of the anatomical volume object (VO) based on the medical image data,
- a second representation generation unit (G2R-U) to generate (G2R) a second representation (2R) of a second subset of the anatomical volume object (VO) based on the medical image data,
- a first boundary setting unit (S1B-U) to set (S1B) first boundary indicators (1B) indicative of an intended course of a modified first representation (1RM),
- a second boundary setting unit (S2B-U) to set (S2B) second boundary indicators (2B) indicative of an intended course of a modified second representation (2RM) based on the first boundary indicators (1B), wherein the second boundary indicators (2B) are set in a way that the intended course of the modified second representation (2RM) is in compliance with a geometrical constraint implied by the intended course of the modified first representation (1RM),
- a geometrical model determination unit (DGM-U) to determine (DGM) the geometric model of the anatomical volume object (VO), comprising a modified first representation generation unit (G1RM-U) to generate (G1RM) a modified first representation (1RM) based on the first boundary indicators (1B) and a modified second representation generation unit (G2RM-U) to generate (G2RM) a modified second representation (2RM) based on the second boundary indicators (2B),
- wherein the medical image data processing device (35) is configured to perform the method of any one of the claims 1 to 6.

8. A medical imaging device (1), comprising:
- a scan unit (26, 28) to scan an examination region of interest of a subject (13) to be examined,
- a control device (30) to control the scan unit (26, 28), and
- the medical image data processing device (35) of claim 7.

9. A computer program product including a computer program, directly loadable into a memory device of a control device of a medical imaging device, including program sections for carrying out the method of any one of the claims 1 to 6 when the computer program is executed in the control device of the medical imaging device.

10. A computer-readable medium (32) storing program sections, readable and executable by a computer unit, to carry out the method of any one of the claims 1 to 6 when the program sections are executed by the computer unit.

## Patentansprüche

1. Rechnerimplementiertes Verfahren zur Bestimmung eines geometrischen Modells eines anatomischen Volumenobjekts (VO), basierend auf medizinischen Bilddaten des anatomischen Volumenobjekts (VO), wobei das Verfahren umfasst:
- Erzeugen (G1R) einer ersten Wiedergabe (1R) einer ersten Untergruppe des anatomischen Volumenobjekts (VO) basierend auf den medizinischen Bilddaten, wobei die medizinischen Bilddaten dreidimensionale Bilddaten einer Untersuchungsregion von Interesse eines zu untersuchenden Probanden (13) umfassen, wobei das anatomische Volumenobjekt (VO) eine Rohrstruktur umfasst, wobei die Rohrstruktur ein Gefäß ist, wobei die erste Wiedergabe (1R) eine erste Oberfläche des anatomischen Volumenobjekts (VO) darstellt,
- Erzeugen (G2R) einer zweiten Wiedergabe (2R) einer zweiten Untergruppe des anatomischen Volumenobjekts (VO) basierend auf den medizinischen Bilddaten, wobei die zweite Wiedergabe (2R) eine zweite Oberfläche oder eine Mittellinie (CL) des anatomischen Volumenobjekts (VO) darstellt,
- Erzeugen einer zweidimensionalen Ansicht des anatomischen Volumenobjekts (VO),
- Einrichten (S1B) erster Grenzindikatoren (1B), die einen beabsichtigten Verlauf einer modifizierten ersten Wiedergabe (1RM) angeben, wobei das Einrichten der ersten Grenzindikatoren (2B) in der zweidimensionalen Ansicht erfolgt, wobei die ersten Grenzindikatoren (1B) durch einen Benutzer manuell mithilfe eines Cursors auf einer Anzeige, die die zweidimensionale Ansicht darstellt, eingerichtet werden,
- Einrichten (S2B) zweiter Grenzindikatoren (2B), die einen beabsichtigten Verlauf einer modifizierten zweiten Wiedergabe (2RM) basierend auf den ersten Grenzindikatoren (1B) angeben, wobei die zweiten Grenzindikatoren (2B) auf eine Weise eingerichtet werden, dass der beabsichtigte Verlauf der modifizierten zweiten Wiedergabe (2RM) eine vom beabsichtigten Verlauf der modifizierten ersten Wiedergabe (1RM) auferlegte geometrische Einschränkung einhält, wobei die geometrische Einschränkung erfordert, dass die modifizierte erste Wiedergabe (1RM) durch die modifizierte zweite Wiedergabe (2RM) umschlossen ist, oder erfordert, dass die modifizierte zweite Wiedergabe (2RM) durch die modifizierte erste Wiedergabe (1RM) umschlossen ist, wobei die Einrichtung der zweiten Grenzindikatoren (2B) in der zweidimensionalen Ansicht erfolgt, wobei die zweiten Grenzindikatoren (2B) automatisch aus den ersten Grenzindikatoren (1B) abgeleitet werden,
- wobei der beabsichtigte Verlauf der modifizierten ersten Wiedergabe (1RM) und der beabsichtigte Verlauf der modifizierten zweiten Wiedergabe (2RM) für eine nahezu unmittelbare Visualisierungsrückmeldung in der zweidimensionalen Ansicht angezeigt werden,
- Bestimmung (DGM) des geometrischen Modells des anatomischen Volumenobjekts (VO), wobei das geometrische Modell ein dreidimensionales geometrisches Modell ist, die Bestimmung das Erzeugen (G1RM) der modifizierten ersten Wiedergabe (1RM) basierend auf den ersten Grenzindikatoren (1B) und das Erzeugen (G2RM) der modifizierten zweiten Wiedergabe (2RM) basierend auf den zweiten Grenzindikatoren (2B) umfasst, wobei das Erzeugen (G1RM) der modifizierten ersten Wiedergabe (1RM) basierend auf den ersten Grenzindikatoren (1B) das Umwandeln der ersten Grenzindikatoren (1B) aus der zweidimensionalen Ansicht in dreidimensionalen Raum umfasst, wobei das Erzeugen (G2RM) der modifizierten zweiten Wiedergabe (2RM) basierend auf den zweiten Grenzindikatoren (2B) das Umwandeln der zweiten Grenzindikatoren (2B) aus der zweidimensionalen Ansicht in den dreidimensionalen Raum umfasst.

2. Verfahren nach Anspruch 1,
- wobei die Rohrstruktur eine Außenwand (OW) und eine Innenwand (IW) umfasst,
- wobei die erste Wiedergabe (1R) die Außenwand (OW) darstellt,
- wobei die zweite Wiedergabe (2R) die Innenwand (IW) darstellt.

3. Verfahren nach Anspruch 1,
- wobei die Rohrstruktur eine Außenwand (OW) und eine Innenwand (IW) umfasst,
- wobei die zweite Wiedergabe (2R) die Außenwand (OW) darstellt,
- wobei die erste Wiedergabe (1R) die Innenwand (IW) darstellt.

4. Verfahren nach Anspruch 1,
- wobei die Rohrstruktur eine Innenwand (IW) umfasst,
- wobei die erste Wiedergabe (1R) die Innenwand (IW) darstellt,
- wobei die zweite Wiedergabe (2R) eine Mittellinie (CL) der Rohrstruktur darstellt.

5. Verfahren nach einem der Ansprüche 1 bis 4,
- wobei die zweidimensionale Ansicht eine nicht linear umformatierte Ansicht und/oder eine Querschnittsansicht umfasst.

6. Verfahren nach einem der Ansprüche 1 bis 5,
wobei die erste Wiedergabe (1R) eine erste implizite Oberflächendarstellung ist und/oder
wobei die zweite Wiedergabe (2R) eine zweite implizite Oberflächendarstellung ist.

7. Verarbeitungseinrichtung (35) für medizinische Bilddaten, umfassend:
- eine erste Wiedergabeerzeugungseinheit (G1R-U) zum Erzeugen (G1R) einer ersten Darstellung (1R) einer ersten Untergruppe des anatomischen Volumenobjekts (VO) basierend auf den medizinischen Bilddaten,
- eine zweite Wiedergabeerzeugungseinheit (G2R-U) zum Erzeugen (G2R) einer zweiten Darstellung (2R) einer zweiten Untergruppe des anatomischen Volumenobjekts (VO) basierend auf den medizinischen Bilddaten,
- eine erste Grenzeinstellungseinheit (S1B-U) zum Einstellen (S1B) erster Grenzindikatoren (1B), die einen beabsichtigten Verlauf einer modifizierten ersten Wiedergabe (1RM) angeben,
- eine zweite Grenzeinstellungseinheit (S2B-U) zum Einstellen (S2B) zweiter Grenzindikatoren (2B), die einen beabsichtigten Verlauf einer modifizierten zweiten Wiedergabe (2RM) basierend auf den ersten Grenzindikatoren (1B) angeben, wobei die zweiten Grenzindikatoren (2B) in einer Weise eingerichtet sind, dass der beabsichtigte Verlauf der modifizierten zweiten Wiedergabe (2RM) eine durch den beabsichtigten Verlauf der modifizierten ersten Wiedergabe (1RM) auferlegte geometrische Einschränkung einhält,
- eine Bestimmungseinheit (DGM-U) eines geometrischen Modells, um das geometrische Modell des anatomischen Volumenobjekts (VO) festzulegen (DGM), umfassend eine modifizierte erste Wiedergabeerzeugungseinheit (G1RM-U) zum Erzeugen (G1RM) einer modifizierten ersten Wiedergabe (1RM) basierend auf den ersten Grenzindikatoren (1B) und eine modifizierte zweite Wiedergabeerzeugungseinheit (G2RM-U) zum Erzeugen (G2RM) einer modifizierten zweiten Wiedergabe (2RM) basierend auf den zweiten Grenzindikatoren (2B),
- wobei die Verarbeitungseinrichtung (35) für medizinische Bilddaten ausgelegt ist zum Durchführen des Verfahrens nach einem der Ansprüche 1 bis 6.

8. Bildgebende medizinische Einrichtung (1), umfassend:
- eine Abtasteinrichtung (26, 28) zum Abtasten einer Untersuchungsregion von Interesse eines zu untersuchenden Probanden (13),
- eine Steuerungseinrichtung (30) zum Steuern der Abtasteinheit (26, 28), und
die medizinische Bilddatenverarbeitungseinrichtung (35) nach Anspruch 7.

9. Rechnerprogrammprodukt, aufweisend ein Rechnerprogramm, direkt ladbar in eine Speichereinrichtung einer Steuerungseinrichtung einer bildgebenden medizinischen Einrichtung, aufweisend Programmabschnitte zum Durchführen des Verfahrens nach einem der Ansprüche 1 bis 6, wenn das Rechnerprogramm in der Steuerungseinrichtung der bildgebenden medizinischen Einrichtung ausgeführt wird.

10. Rechnerlesbares Medium (32), speichernd durch eine Rechnereinheit auslesbare und ausführbare Programmabschnitte, um das Verfahren nach einem der Ansprüche 1 bis 6 durchzuführen, wenn die Programmabschnitte durch die Rechnereinheit ausgeführt werden.

## Revendications

1. Procédé assisté par ordinateur de détermination d'un modèle géométrique d'un objet (VO) anatomique en volume, reposant sur une donnée d'image médicale de l'objet (VO) anatomique en volume, procédé dans lequel :
- on produit (GIR) une première représentation (1R) d'un premier sous-jeu de l'objet (VO) anatomique en volume reposant sur la donnée d'image médicale, la donnée d'image médicale comprenant une donnée d'image en trois dimensions d'une région à examiner à laquelle on s'intéresse d'un sujet (13) à examiner, l'objet (VO) anatomique en volume comprenant une structure tubulaire, la structure tubulaire étant un vaisseau, la première représentation (1R) représentant une première surface de l'objet (VO) anatomique en volume,
- on produit une deuxième représentation (2R) d'un deuxième sous-jeu de l'objet (VO) anatomique en volume reposant sur la donnée d'image médicale, la deuxième représentation (2R) représentant une deuxième surface ou une ligne (CL) centrale de l'objet (VO) anatomique en volume,
- on produit une vue en deux dimensions de l'objet (VO) anatomique en volume,
- on règle (S1B) des premiers indicateurs (1B) de limite indiquant une allure envisagée d'une première représentation (1RM) modifiée, un réglage des premiers indicateurs (1B) de limite se produisant dans la vue en deux dimensions, les premiers indicateurs (1B) de limite étant sélectionnés manuellement par un utilisateur, à l'aide d'un curseur sur un écran représentant la vue en deux dimensions,
- on règle (S2B) des deuxièmes indicateurs (2B) de limite indiquant une allure envisagée d'une deuxième représentation (2RM) modifiée reposant sur les premiers indicateurs (1B) de limite, les deuxièmes indicateurs (2B) de limite étant réglés de manière à ce que l'allure envisagée de la deuxième représentation (2RM) modifiée soit en accord avec une contrainte géométrique impliquée par l'allure envisagée de la première représentation (1RM) modifiée, la contrainte géométrique exigeant que la première représentation (1RM) modifiée soit enfermée par la deuxième représentation (2RM) modifiée ou exigeant que la deuxième représentation (2RM) modifiée soit enfermée par la première représentation (1RM) modifiée, un réglage des deuxièmes indicateurs (2B) de limite se produisant dans la vue en deux dimensions, les deuxièmes indicateurs (2B) de limite étant déduits automatiquement des premiers indicateurs (1B) de limite,
- l'allure envisagée de la première représentation (1RM) modifiée et l'allure envisagée de la deuxième représentation (2RM) modifiée étant affichées dans la vue en deux dimensions pour une réaction de visualisation presque immédiate,
- on détermine (DGM) le modèle géométrique de l'objet (VO) anatomique en volume, le modèle géométrique étant un modèle géométrique en trois dimensions, la détermination comprenant la production (G1RM) de la première représentation (1RM) modifiée reposant sur les premiers indicateurs (1B) de limite et la production (G2RM) de la deuxième représentation (2RM) modifiée reposant sur les deuxièmes indicateurs (2B) de limite, la production (G1RM) de la première représentation (1RM) modifiée reposant sur les premiers indicateurs (1B) de limite comprenant une transformation des premiers indicateurs (1B) de limite de la vue en deux dimensions à l'espace en trois dimensions, la production (G2RM) de la deuxième représentation (2RM) modifiée reposant sur les deuxièmes indicateurs (2B) de limite comprenant une transformation des deuxièmes indicateurs (2B) de limite de la vue en deux dimensions à l'espace en trois dimensions.

2. Procédé suivant la revendication 1,
- dans lequel la structure tubulaire comprend une paroi (OW) extérieure et une paroi (IW) intérieure,
- dans lequel la première représentation (1R) représente la paroi (OW) extérieure,
- dans lequel la deuxième représentation (2R) représente la paroi (IW) intérieure.

3. Procédé suivant la revendication 1,
- dans lequel la structure tubulaire comprend une paroi (OW) extérieure et une paroi (IW) intérieure,
- dans lequel la deuxième représentation (2R) représente la paroi (OW) extérieure,
- dans lequel la première représentation (1R) représente la paroi (IW) intérieure.

4. Procédé suivant la revendication 1,
- dans lequel la structure tubulaire comprend une paroi (IW) intérieure,
- dans lequel la première représentation (1R) représente la paroi (IW) intérieure,
- dans lequel la deuxième représentation (2R) représente une ligne (CL) centrale de la structure tubulaire.

5. Procédé suivant l'une quelconque des revendications 1 à 4,
- dans lequel la vue en deux dimensions comprend une vue reformatée non linéairement et/ou une vue en section transversale.

6. Procédé suivant l'une quelconque des revendications 1 à 5,
- dans lequel la première représentation (1R) est une première représentation implicite de surface et/ou
- dans lequel la deuxième représentation (2R) est une deuxième représentation implicite de surface.

7. Dispositif (35) de traitement d'une donnée d'image médicale, comprenant :
- une première unité (G1R-U) de production d'une première représentation pour produire (G1R) une première représentation (1R) d'un premier sous-jeu de l'objet (VO) anatomique en volume reposant sur la donnée d'image médicale,
- une deuxième unité (G2R-U) de production d'une deuxième représentation pour produire (G2R) une deuxième représentation (2R) d'un deuxième sous-jeu de l'objet (VO) anatomique en volume reposant sur la donnée d'image médicale,
- une première unité (S1B-U) de réglage de limite pour régler (S1B) des premiers indicateurs (1B) de limite indiquant une allure envisagée d'une première représentation (1RM) modifiée,
- une deuxième unité (S2B-U) de réglage de limite pour régler (S2B) des deuxièmes indicateurs (2B) de limite indiquant une allure envisagée d'une deuxième représentation (2RM) modifiée reposant sur les premiers indicateurs (1B) de limite, les deuxièmes indicateurs (2B) de limite étant réglés de manière à ce que l'allure envisagée de la deuxième représentation (2RM) modifiée soit en accord avec une contrainte géométrique impliquée par l'allure envisagée de la première représentation (1RM) modifiée,
- une unité (DGM-U) de détermination de modèle géométrique pour déterminer (DGM) le modèle géométrique de l'objet (VO) anatomique en volume, comprenant une unité (G1RM-U) de production d'une première représentation modifiée, pour produire (G1RM) une première représentation (1RM) modifiée, reposant sur les premiers indicateurs (1B) de limite et une unité (G2RM-U) de production d'une deuxième représentation modifiée pour produire (G2RM) une deuxième représentation (2RM) modifiée reposant sur les deuxièmes indicateurs (2B) de limite,
- dans lequel le dispositif (35) de traitement d'une donnée d'image médicale est configuré pour effectuer le procédé suivant l'une quelconque des revendications 1 à 6.

8. Dispositif (1) d'imagerie médicale, comprenant :
- une unité (26, 28) de scan pour scanner une région à examiner à laquelle on s'intéresse d'un sujet (13) à examiner,
- un dispositif (30) de commande pour commander l'unité (26, 28) de scan, et
- le dispositif (35) de traitement d'une donnée d'image médicale suivant la revendication 7.

9. Produit de programme d'ordinateur comprenant un programme d'ordinateur pouvant être chargé directement dans un dispositif de mémoire d'un dispositif de commande d'un dispositif d'imagerie médicale, comprenant des parties de programme pour effectuer le procédé suivant l'une quelconque des revendications 1 à 6, lorsque le programme d'ordinateur est exécuté dans le dispositif de commande du dispositif d'imagerie médicale.

10. Support (32) déchiffrable par ordinateur de mise en mémoire de parties de programme pouvant être déchiffrées et exécutées par une unité informatique pour effectuer le procédé suivant l'une quelconque des revendications 1 à 6, lorsque les parties du programme sont exécutées par l'unité informatique.
